# EUROPÄISCHE PATENTSCHRIFT

(11) **EP 1 755 822 B1**
(45) Veröffentlichungstag und Bekanntmachung des Hinweises auf die Patenterteilung: **16.07.2008**
(21) Anmeldenummer: 05758725.5
(22) Anmeldetag: 14.06.2005
(51) Int. Cl.: B23Q 3/155, B23B 31/26, B23Q 3/157

(54) **WERKZEUGMASCHINE UND VERFAHREN ZUM WECHSEL VON WERKZEUGEN AN DIESER WERKZEUGMASCHINE**
MACHINE TOOL AND METHOD FOR CHANGING TOOLS ON SAID MACHINE TOOL
MACHINE-OUTIL ET PROCEDE DE CHANGEMENT D'OUTILS SUR CETTE MACHINE-OUTIL

(30) Priorität: 14.06.2004 DE 102004029043
(43) Veröffentlichungstag der Anmeldung: 28.02.2007
(73) Patentinhaber: Chiron-Werke GmbH & Co. KG, 78532 Tuttlingen (DE)
(72) Erfinder: PRUST, Dirk, 78532 Tuttlingen (DE); WINKLER, Hans-Henning, 78532 Tuttlingen (DE)
(74) Vertreter: Otten, Hajo
(86) Internationale Anmeldenummer: PCT/EP2005/006363
(87) Internationale Veröffentlichungsnummer: WO 2005/120769

(56) Entgegenhaltungen:
- EP-A- 0 517 085
- DE-U- 29 922 642
- PATENT ABSTRACTS OF JAPAN Bd. 012, Nr. 346 (M-742), 16. September 1988 (1988-09-16) & JP 63 105854 A (HOWA MACH LTD), 11. Mai 1988 (1988-05-11)

## Beschreibung

Die vorliegende Erfindung betrifft eine Werkzeugmaschine nach dem Oberbegriff von Anspruch 10 (siehe, z.B., DE-299 22 642-U).

Die Erfindung betrifft ferner ein Verfahren nach dem Oberbegriff von Anspruch 1.

Derartige Werkzeugmaschinen sowie Verfahren zum Wechseln von Werkzeugen sind aus dem Stand der Technik umfangreich bekannt.

So beschreibt die DE 41 17 701 A1 (= EP-0 517 085) eine Werkzeugmaschine, bei der um die Arbeitsspindel verteilt eine Vielzahl von Werkzeugwechslern vorgesehen sind, die jeweils einen Greifer tragen, in den ein ein Werkzeug tragender Werkzeughalter eingesetzt ist. Auf diese Weise befinden sich so viele Werkzeuge in ihrer zu der Werkzeugaufnahme in der Arbeitsspindel beabstandeten Magazinposition, wie Werkzeugwechsler vorhanden sind.

Zum Einwechseln eines Werkzeuges in die Werkzeugaufnahme wird der Werkzeugwechsler ausgefahren, wobei wegen der Parallelogrammführung der Greifer mit dem Werkzeughalter unter der Arbeitsspindel zu liegen kommt. Der Werkzeugwechsler wird dann über eine sämtliche Werkzeugwechsler tragende Hülse in axialer Richtung nach oben gefahren, wodurch der Werkzeughalter in die Werkzeugaufnahme eingesetzt wird. In der Arbeitsspindel ist ein Spannsystem vorgesehen, das jetzt den Werkzeughalter ergreift und in der Werkzeugaufnahme verspannt.

Nachdem der Werkzeughalter drehfest mit der Arbeitsspindel verbunden ist, wird diese auf ihre Betriebsdrehzahl hochgefahren. Der Greifer verbleibt dabei an dem Werkzeughalter, wobei entsprechende Maßnahmen vorgesehen sind, damit der Werkzeughalter während des Betriebes von dem Greifer freikommt.

Wenn ein neues Werkzeug eingewechselt werden soll, wird die Arbeitsspindel abgebremst, bis sie eine Kupplungsdrehzahl erreicht, bei der das Spannsystem gelöst und der Werkzeughalter aus der Werkzeugaufnahme ausgestoßen und von dem Greifer wieder aufgenommen wird. Der Greifer schwenkt dann den Werkzeughalter zurück in seine Magazinposition, während im Gegentaktbetrieb ein anderer Werkzeughalter durch den entsprechenden Werkzeugwechsler in die Werkzeugaufnahme eingesetzt und dort mit Hilfe des Spannsystems verspannt wird.

Aus der DE 102 25 143 A1 ist eine Werkzeugmaschine bekannt, die zwei Werkzeugwechsler aufweist, die im Gegentaktbetrieb Werkzeuge zwischen einem Maschinenmagazin und der Werkzeugaufnahme in der Arbeitsspindel auswechseln. Das Maschinenmagazin ist ortsfest angeordnet, während die beiden Werkzeugwechsler an dem die Arbeitsspindel tragenden Spindelkopf angeordnet sind. Der Spindelkopf fährt in eine Wechselposition, wo der eine Werkzeugwechsler das zuvor verwendete Werkzeug aus der Werkzeugaufnahme entnimmt, während der andere Werkzeugwechsler bereits ein einzuwechselndes Werkzeug aus dem Werkzeugmagazin entnommen hat, wo die Werkzeuge in ihrer Magazinposition gelagert sind.

Bei dieser Werkzeugmaschine verbleibt der Greifer nicht an dem im Einsatz befindlichen Werkzeug. Wenn ein Werkzeug ausgewechselt werden soll, wird zunächst die Arbeitsspindel abgebremst, bis sie zum Stillstand kommt, bevor der Greifer das Werkzeug erfassen kann, das daraufhin ausgestoßen wird, damit es in dem Werkzeugmagazin abgelegt werden kann.

Bei dem zuletzt beschriebenen Verfahren sowie der zuletzt beschriebenen Werkzeugmaschine ist von Nachteil, dass die Arbeitsspindel immer erst zum Stillstand abgebremst werden muss, bevor der Lösevorgang für das eingespannte Werkzeug beginnen kann. Beim Lösen des Spannsystems besteht nämlich die Gefahr, dass der Werkzeughalter aus der Werkzeugaufnahme herausfällt, weshalb das Spannsystem erst dann gelöst wird, wenn der Greifer das Werkzeug wieder erfasst hat. Diese Verfahrensschritte sind jedoch zeitintensiv, was die Zeit, die für das Auswechseln eines Werkzeuges benötigt wird, verlängert.

Auch beim Einspannen muss mit dem Wegfahren des Greifers hier so lange gewartet werden, bis das Spannsystem den Werkzeughalter sicher eingespannt hat, was ebenfalls Zeit kostet.

Insgesamt wird die Werkzeugwechselzeit bei der bekannten Werkzeugmaschine sowie bei dem bekannten Verfahren als zu lang empfunden, denn die Werkzeugwechselzeit geht maßgeblich in die Span-zu-Span-Zeit ein, die ein Maß für die Bearbeitungsgeschwindigkeit der Werkzeugmaschine ist. Je länger nämlich ein Werkzeugwechsel dauert, desto länger dauert es auch, bis das eingewechselte Werkzeug wieder im Eingriff mit dem Werkstück ist. Insbesondere in der Massenproduktion ist es jedoch wünschenswert, mit möglichst kurzen Span-zu-Span-Zeiten zu arbeiten.

Eine Möglichkeit, die Werkzeugwechselzeit zu verkürzen, besteht darin, den Greifer auch während der Bearbeitung am Werkzeughalter zu belassen, also einen mit der Arbeitsspindel mitfahrenden Werkzeugwechsler zu verwenden, wie dies in der eingangs erwähnten DE 41 17 701 A1 der Fall ist. Dies ist jedoch nicht nur konstruktiv aufwendig, hierdurch werden auch die bewegten Massen erhöht, wenn viele Werkzeugwechsler mit bewegt werden, wobei auch die Speicherkapazität für Werkzeuge hier begrenzt ist.

Allerdings ist auch hier eine merkliche Zeitspanne erforderlich, bis der Werkzeughalter in den Greifer ausgestoßen und ausgewechselt werden kann. Die Werkzeugwechselzeit wird zwar dadurch noch einmal verkürzt, dass der Werkzeughalter in den Greifer ausgestoßen wird, wenn die Arbeitsspindel sich noch mit Kupplungsdrehzahl dreht, aber dennoch bleibt das Bestreben, auch hier die Werkzeugwechselzeit weiter zu verkürzen.

Aus der EP 0 517 085 A1 ist ein Verfahren zum Wechseln von Werkzeugen an einer Werkzeugmaschine bekannt, bei der ein Greifer eines Werkzeugwechslers ein aus einer Aufnahme zu entnehmendes Werkzeug vor dem Ausstoßen aus der Aufnahme einer Spindel der Werkzeugmaschine erfasst. Ein Antriebsmotor der Spindel wird dabei abgebremst, und das Werkzeug wird in den Greifer ausgestoßen, bevor der Antriebsmotor der Spindel zum Stillstand abgebremst wurde.

Vor diesem Hintergrund liegt der vorliegenden Erfindung die Aufgabe zugrunde, bei der bekannten Werkzeugmaschine sowie dem bekannten Verfahren die für einen Werkzeugwechsel benötigte Zeitspanne zu verkürzen, ohne dass die Betriebssicherheit beeinträchtigt wird.

Bei dem eingangs erwähnten Verfahren wird diese Aufgabe dadurch gelöst, dass das Spannsystem einen dem Spannvorgang zeitlich vorausgehenden Haltevorgang durchführt, um den in die Werkzeugaufnahme eingesetzten Werkzeughalter vorzugsweise formschlüssig zu erfassen, bevor das Spannsystem den Werkzeughalter verspannt, und/oder einen dem Lösevorgang zeitlich nachfolgenden Freigabevorgang durchführt, um den Werkzeughalter nach dem Lösen des Spannsystems noch vorzugsweise formschlüssig in der Werkzeugaufnahme zu halten, bis er ausgestoßen wird, und dass das Spannsystem einen Spanndorn umfasst, der beim Einwechseln eines Werkzeughalters einen den Haltevorgang auslösenden Haltehub und daran anschließend einen den Spannvorgang auslösenden Spannhub durchführt und der beim Auswechseln eines Werkzeughalters einen den Lösevorgang auslösenden Lösehub und daran anschließend einen den Freigabevorgang auslösenden Freigabehub durchführt.

Bei der eingangs erwähnten Werkzeugmaschine wird diese Aufgabe dadurch gelöst, dass das Spannsystem einen Spanndorn umfasst, der mit seinem axialen Hub sowohl die Spannvorrichtung als auch die Haltevorrichtung betätigt.

Die der Erfindung zugrunde liegende Aufgabe wird auf diese Weise vollkommen gelöst.

Auf diese Weise kann der Spanndorn mit seinem axialen Hub sowohl die Spannvorrichtung als auch die Haltevorrichtung betätigen, was insbesondere konstruktiv von Vorteil ist.

Spannsysteme mit axial bewegtem Spanndorn sind aus dem Stand der Technik hinreichend bekannt, sie werden insbesondere für HSK-Werkzeughalter eingesetzt; siehe bspw. die DE 100 31 027 A1. Durch Weiterbildung dieses Spannsystems, nämlich durch Vorsehen der zusätzlichen Haltevorrichtung, kann ohne Veränderung an dem HSK-Werkzeughalter oder sonstige konstruktive Änderungen an der Arbeitsspindel das neue Verfahren implementiert werden.

Der Werkzeugwechsel gestaltet sich durch den axialen Hub des Spanndornes auch besonders schnell, denn der Spanndorn wird beim Einwechseln eines Werkzeughalters zunächst ein kurzes Stück zurückgezogen, wodurch der Haltevorgang ausgelöst wird, dann wird die Arbeitspindel hochbeschleunigt und gleichzeitig der Spannhub durchgeführt. Zum Auswechseln eines Werkzeuges erfolgen diese Schritte in umgekehrter Richtung, wobei der Spanndorn nach oder bei dem Freigabehub den Werkzeughalter aus der Werkzeugaufnahme ausstößt.

Durch den zweistufigen Ablauf bei dem erfindungsgemäßen Verfahren kann der Lösevorgang des Spannsystems schon bei hoher Drehzahl der Arbeitsspindel beginnen, also noch bevor der Greifer den Werkzeughalter wieder erfasst hat und/oder bevor der Werkzeughalter in den an ihm verbliebenen Greifer ausgestoßen werden kann. Beim Einspannen eines Werkzeughalters ergibt sich der Vorteil, dass die Arbeitsspindel zu einem früheren Zeitpunkt wieder auf Betriebsdrehzahl hochbeschleunigt werden kann, denn der Werkzeughalter kommt von dem Greifer frei und wird sicher gehalten, bevor er vollständig eingespannt ist.

Die Erfinder der vorliegenden Anmeldung haben nämlich erkannt, dass der Haupt-Zeitfaktor beim Werkzeugwechsel in dem Einspannen und Lösen des Werkzeughalters besteht, das Ausstoßen sowie das Ergreifen des Werkzeughalters nimmt dagegen deutlich weniger Zeit in Anspruch.

Erfindungsgemäß wird der Spann- und Lösevorgang jetzt jeweils in zwei Schritte unterteilt, wozu in der neuen Werkzeugmaschine in dem Spannsystem eine zusätzliche Haltevorrichtung vorgesehen ist, die den Werkzeughalter zu einem frühen Zeitpunkt des Einwechselns ergreift, ohne ihn bereits zu verspannen, und/oder ihn nach dem Lösen des Spannsystems zunächst noch sicher in der Werkzeugaufnahme hält, bis er ausgestoßen werden kann.

Damit kann sowohl beim Ein- als auch beim Auswechseln Zeit gewonnen werden, wobei die Werkzeugwechselzeit auch bereits dadurch verkürzt werden kann, dass der zweistufige Ablauf entweder beim Einwechseln oder beim Auswechseln vorgesehen wird.

Der Zeitvorteil lässt sich auch unabhängig davon realisieren, ob der Greifer an dem Werkzeughalter verbleibt, wenn dieser in die Werkzeugaufnahme eingespannt ist, oder ob der Greifer von dem Werkzeughalter weggefahren wird, sobald dieser von der Haltevorrichtung erfasst wurde, also der Haltevorgang durchgeführt wurde.

Die erfindungsgemäßen Vorteile ergeben sich auch unabhängig davon, ob der Werkzeughalter bei stehender Arbeitsspindel oder bei mit Kupplungsdrehzahl rotierender Arbeitsspindel ausgewechselt wird.

Die vier zuletzt genannten Maßnahmen sind für sich genommen jeweils aus dem Stand der Technik bekannt, durch die neue Werkzeugmaschine und das neue Verfahren ergibt sich bei jedem dieser vier Abläufe eine deutliche Reduzierung der Werkzeugwechselzeit.

Der Lösevorgang und/oder der Spannvorgang können dabei bei rotierender Arbeitsspindel durchgeführt werden, wobei vorzugsweise der Lösevorgang bei höheren Drehzahl der Arbeitsspindel als der Freigabevorgang und/oder der Spannvorgang bei höherer Drehzahl der Arbeitsspindel als der Haltevorgang durchgeführt wird.

Mit anderen Worten bedeutet dies, dass bei stehender oder mit niedriger Drehzahl drehender Arbeitsspindel ein Werkzeug in die Werkzeugaufnahme eingewechselt und dort durch den Haltevorgang gehalten wird, so dass er nicht mehr aus der Werkzeugaufnahme herausfallen kann, selbst wenn der Greifer von dem Werkzeughalter entfernt wird oder geeignete Maßnahmen ergriffen werden, dass der Werkzeughalter von dem Greifer freikommt. Jetzt kann die Arbeitsspindel bereits auf Betriebsdrehzahl hochbeschleunigt werden, während zeitgleich der Spannvorgang beginnt, durch den der bereits sicher gehaltene Werkzeughalter jetzt so verspannt wird, dass entsprechende Planflächen an der Arbeitsspindel sowie dem Werkzeughalter so miteinander in Anlage gelangen, dass der Werkzeughalter lagegenau in der Werkzeugaufnahme zu liegen kommt, was für die erforderliche Bearbeitungsgenauigkeit der Werkzeugmaschine erforderlich ist.

Umgekehrt kann die Spannvorrichtung bereits bei hoher Drehzahl der Arbeitsspindel den Lösevorgang durchführen, während die Arbeitsspindel zeitgleich auf Kupplungsdrehzahl oder zum Stillstand abgebremst wird. Nach dem Lösen wird der Werkzeughalter durch die Haltevorrichtung sicher gehalten. Erst wenn die Kupplungsdrehzahl oder der Stillstand erreicht ist, erfolgt der Freigabevorgang.

Zusätzliche Vorrichtungen zum Sichern von Werkzeughaltern an sich sind aus dem Stand der Technik zwar bereits bekannt, diese sind jedoch nicht aktiv gesteuert.

So beschreibt die DE 101 59 661 C1 eine Spannvorrichtung der hier in Rede stehenden Art, bei der eine Klemmhülse mit radial federnden Klemmabschnitten vorgesehen ist, die einen in die Werkzeugaufnahme eingeschobenen Werkzeughalter durch reibschlüssige Anlage hält, bevor das Spannsystem den Werkzeughalter ergreift und vollständig einspannt.

Das DE 299 22 642 U1 beschreibt eine entsprechende Spannvorrichtung, bei der zusätzlich zu dem Spannsystem in Radialrichtung federnde Haltezungen vorgesehen sind. Sowohl an dem aktiv betätigten Spannsystem als auch an den Haltezungen sind Halteschultern vorgesehen, die mit Anlageflächen in dem Werkzeughalter in Anlage gelangen. Die Halteschultern der federnden Haltezungen liegen axial weiter unten als die Halteschultern des Spannsystems, so dass die Haltezungen den eingeschobenen Werkzeughalter früher ergreifen als das Spannsystem selbst.

In beiden Fällen wird der Werkzeughalter durch Federkraft in Eingriff mit der entsprechenden Vorrichtung gebracht, weshalb bei einem Einkuppeln mit drehender Arbeitsspindel eine Relativbewegung zwischen dem Werkzeughalter und der Vorrichtung erfolgt, was wegen der schnellen Werkzeugwechsel sehr schnell zu einem hohen Verschleiß führt, weshalb nach Erkenntnis der hiesigen Anmelderin die bekannten Vorrichtungen nur mit stehender Arbeitsspindel eingesetzt werden können.

Hinzu kommt, dass in beiden Fällen die Haltekraft durch die Federkraft bzw. Klemmkraft bestimmt wird, so dass bei lediglich durch die Vorrichtung gehaltenem Werkzeughalter die Arbeitsspindel keine schnellen oder ruckartigen Bewegungen durchführen kann, da ansonsten die Gefahr besteht, dass die zwar gehaltenen aber noch nicht eingespannten Werkzeughalter aus der Arbeitsspindel herausgeschleudert werden.

Im Gegensatz dazu wird erfindungsgemäß eine aktiv gesteuerte Haltevorrichtung verwendet, bei der weder das Verschleißproblem noch die Gefahr besteht, dass der Werkzeughalter aus der Haltevorrichtung herausgeschleudert werden kann.

Während der Stand der Technik also reine Klemmvorrichtungen zeigt, wird erfindungsgemäß eine sozusagen aktiv gesteuerte Haltevorrichtung verwendet, die durch das Spannsystem selbst in Eingriff und außer Eingriff gebracht wird. Vorzugsweise ergreift die Haltevorrichtung einen eingesetzten Werkzeughalter formschlüssig, so dass er besonders sicher gehalten wird.

Dabei ist es bevorzugt, wenn der Spanndorn bei dem Lösehub einen axial längeren Weg als bei dem Freigabehub und/oder bei dem Spannhub einen axial längeren Weg als bei dem Haltehub zurücklegt.

Hier ist von Vorteil, dass zum Spannen und dementsprechend Lösen des Werkzeughalters ein großer Hub zur Verfügung steht, durch den der Werkzeughalter mit großer Kraft in die Werkzeugaufnahme eingespannt werden kann, so dass er lagerichtig mit seiner Planfläche an der zugeordneten Planfläche der Arbeitsspindel zu liegen kommt.

Da der Lösehub und der Spannhub parallel zum Abbremsen bzw. Hochbeschleunigen der Arbeitsspindel erfolgt, erfordern sie keine zusätzliche Zeitspanne zum Werkzeugwechsel, zusätzlich zum Hochbeschleunigen oder Abbremsen der Arbeitsspindel sind nur noch der Freigabehub und der Haltehub durchzuführen, die sehr schnell ablaufen.

Allgemein ist es bevorzugt, wenn die Spannvorrichtung erste Zangensegmente umfasst, die zwischen einer radial äußeren Stellung, in der sie in einen Hohlschaft des Werkzeughalters eingreifen und diesen verspannen, und einer radial inneren Stellung bewegbar sind, in der sie den Hochschaft freigeben, wobei vorzugsweise die Haltevorrichtung zweite Zangensegmente umfasst, die zwischen einer radial äußeren Stellung, in der sie in einen Hohlschaft des Werkzeughalters eingreifen und diesen drehfest in der Werkzeugaufnahme halten, und einer radial inneren Stellung bewegbar sind, in der sie den Hohlschaft freigeben. Die ersten und zweiten Zangensegmente können dabei jeweils ein einem gemeinsamen Segment ausgebildet sein.

Spannsysteme, bei denen eine Spannvorrichtung mit ersten Zangensegmenten vorgesehen sind, sind aus dem Stand der Technik hinreichend bekannt. Erfindungsgemäß wird jetzt die Haltevorrichtung mit den zweiten Zangensegmenten vorgesehen, die nicht zum Verspannen des Werkzeughalters, sondern lediglich zum sicheren Ergreifen des Werkzeughalters dienen, damit er bei gelöster Spannvorrichtung oder vor dem Spannen der Spannvorrichtung nicht herausfallen kann. Die zweiten Zangensegmente können als zusätzliche Segmente vorgesehen sein, oder an den ersten Zangensegmenten ausgebildet sein.

Dabei ist es bevorzugt, wenn die ersten und zweiten Zangensegmente erste bzw. zweite Gleitschrägen aufweisen, die mit ersten bzw. zweiten Gegenschrägen auf dem Spanndorn zusammenwirken, wobei die ersten und zweiten Gleitschrägen in axialer Richtung einen größeren Abstand zueinander aufweisen als die ersten und zweiten Gegenschrägen.

Durch diese Maßnahme wird dafür gesorgt, dass beim Zurückziehen des ausgefahrenen Spanndorns zunächst die zweiten Zangensegmente radial nach außen bewegt werden und dabei den Werkzeughalter sicher erfassen, so dass der Greifer den Werkzeughalter freigeben kann. Dies erfolgt in einem relativ kurzen Hub, wobei durch die unterschiedlichen Abstände zwischen den ersten und zweiten Gegenschrägen sowie den ersten und zweiten Gleitschrägen dafür gesorgt wird, dass die richtige Reihenfolge der Betätigung der zunächst zweiten und dann ersten Zangensegmente beim Einspannen eingehalten wird.

Allgemein ist es noch bevorzugt, wenn die ersten und zweiten Zangensegmente erste bzw. zweite Halteschultern aufweisen, die axial etwa auf gleicher Höhe liegen und einer nach innen vorspringenden Anlagefläche in dem Hohlschaft zugeordnet sind.

Für die ersten Zangensegmente ist diese Maßnahme bei HSK-Werkzeughaltern bekannt, hier ist jetzt von Vorteil, dass die zweiten Zangensegmente mit ihren zweiten Halteschultern an derselben Anlagefläche angreifen wie die ersten Zangensegmente.

Damit ist es beispielsweise möglich, in der Spannvorrichtung kürzere Zangensegmente zu verwenden als in der Haltevorrichtung, wobei es auch möglich ist, einige der Zangensegmente der Spannvorrichtung als Haltevorrichtung auszubilden, indem sie erfindungsgemäß mit den zweiten Gegenschrägen auf den Spanndorn zusammenwirken und nicht mit den ersten Gegenschrägen, wie die ersten Zangensegmente.

Weitere Vorteile ergeben sich aus der Beschreibung und der beigefügten Zeichnung.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung gemäss den beiliegenden Ansprüchen verwendbar sind.

Ein Ausführungsbeispiel der Erfindung ist in der Zeichnung dargestellt und wird in der nachfolgenden Beschreibung näher erläutert. Es zeigen:
- Fig. 1: in schematischer Seitenansicht eine Prinzipskizze der neuen Werkzeugmaschine;
- Fig. 2: in einer schematischen Vorderansicht eine Prinzipskizze der neuen Werkzeugmaschine in einem anderen Ausführungsbeispiel;
- Fig. 3: in schematischer, teilweise geschnittener Darstellung die Arbeitsspindel der Werkzeugmaschine aus Fig. 1 oder Fig. 2 im Bereich der Werkzeugaufnahme, mit eingesetztem Werkzeughalter, jedoch vor Beginn des Haltevorganges;
- Fig. 4: eine Darstellung wie Fig. 3, wobei jedoch der Haltevorgang durchgeführt wurde;
- Fig. 5: eine Darstellung wie Fig. 4, wobei jedoch der Spannvorgang durchgeführt wurde; und
- Fig. 6: eine Darstellung wie Fig. 4, wobei jedoch der Lösevorgang durchgeführt wurde.

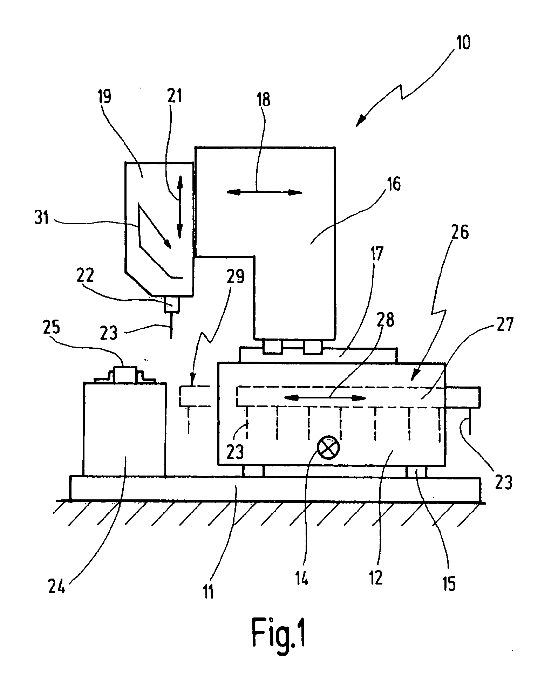

In Fig. 1 ist mit 10 eine Werkzeugmaschine bezeichnet, die in schematischer, nicht maßstabs- und detailgetreuer Darstellung gezeigt ist.

Die Werkzeugmaschine 10 weist auf ihrem Maschinenfuß 11 einen ersten Schlitten 12 auf, der in Richtung einer ersten Achse 14 auf Führungsschienen 15 verfahrbar ist. Auf dem ersten Schlitten 12 ist ein zweiter Schlitten 16 über Führungsschienen 17 in Richtung einer zweiten Achse 18 verfahrbar angeordnet.

An dem zweiten Schlitten 16 ist ein Spindelkopf 19 in Richtung einer dritten Achse 21 verfahrbar gelagert. In dem Spindelkopf 19 ist drehbar eine Arbeitsspindel 22 gelagert, die an ihrem unteren Ende ein Werkzeug 23 trägt.

Auf dem Maschinenfuß 11 ist ferner ein Werkstücktisch 24 vorgesehen, der ein schematisch angedeutetes Werkstück 25 trägt, das durch Verfahren des Spindelkopfes 19 und damit der Arbeitsspindel 18 in den drei Achsen 14, 18, 21 mit dem Werkzeug 23 an unterschiedlichen Stellen bearbeitet wird.

Auf dem ersten Schlitten 12 ist ferner ein Maschinenmagazin 26 in Form eines Kettenmagazins 27 gelagert, das in Richtung eines Pfeils 28 verfahrbar ist.

In seiner gestrichelt dargestellten Spindelposition 29 ermöglicht das Kettenmagazin 27 einen Werkzeugwechsel an der Werkzeugspindel 22.

Dieser Werkzeugwechsel kann im Pick-up-Verfahren erfolgen, bei dem die Werkzeugspindel 22 zunächst das gebrauchte Werkzeug 23 in einen Leerplatz in dem Kettenmagazin 27 ablegt, das Kettenmagazin 27 dann ein neues Werkzeug 23 in die Spindelposition fährt, das dann von der Werkzeugspindel 22 aufgenommen wird.

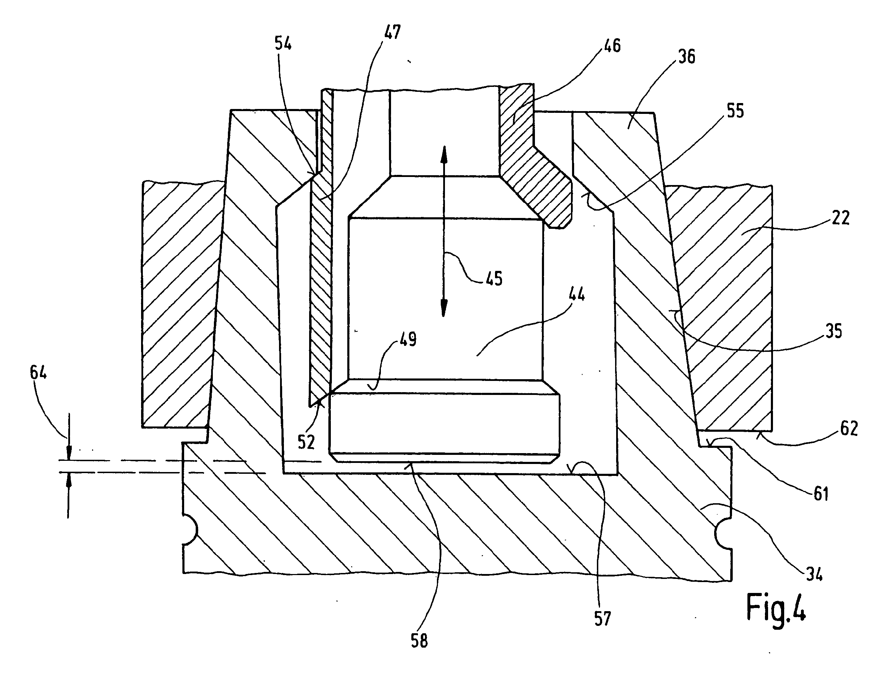

Bei dem Ausführungsbeispiel der Fig. 4 sind jedoch zwei Werkzeugwechsler vorgesehen, von denen bei 31 schematisch einer am Spindelkopf 19 dargestellt ist.

Zum Auswechseln eines Werkzeuges 23 aus der Arbeitsspindel 22 wird ein Werkzeugwechsler unter die Arbeitsspindel 22 gefahren, die zum Stillstand abgebremst wurde. Der Werkzeugwechsler 31 erfasst mit seinem in Fig. 1 nicht dargestellten Greifer das Werkzeug 23, das dann durch das in Fig. 1 ebenfalls nicht dargestellte Spannsystem ausgestoßen wird. Der Werkzeugwechsler fährt nun das Werkzeug 23 in seine Magazinposition in dem Kettenmagazin 27, wobei zeitgleich der andere Werkzeugwechsler 31 bereits ein Werkzeug 23 aus dem Kettenmagazin 27 entnommen hat und jetzt im Gegentaktbetrieb in die Arbeitsspindel 22 einsetzt. Nachdem das Werkzeug in der Arbeitsspindel 22 verspannt wurde, gibt der Greifer das Werkzeug 23 frei und die Arbeitsspindel 22 wird auf Betriebsdrehzahl hochbeschleunigt.

Es sei noch erwähnt, dass die Werkzeuge 23 nicht unmittelbar von dem Werkzeughalter 31 ergriffen werden, sondern dass die Werkzeuge 23 in an sich bekannter Weise in einen Werkzeughalter eingespannt sind, für den vorne an der Arbeitsspindel 22 eine genormte Werkzeugaufnahme vorgesehen ist, und den in an sich bekannter Weise Greifer erfassen können, die an den Werkzeugwechslern 31 vorgesehen sind.

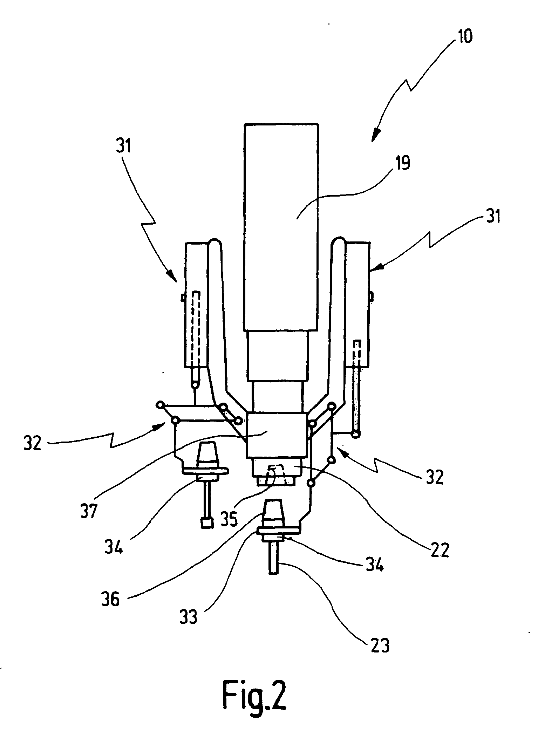

Insoweit ist diese Konstruktion vergleichbar zu der jetzt im Zusammenhang mit Fig. 2 geschilderten alternativen Ausführungsform der neuen Werkzeugmaschine.

Bei der in Fig. 2 gezeigten Werkzeugmaschine sind gleiche Bauteile mit dem gleichen Bezugszeichen bezeichnet wie in Fig. 1. Die Werkzeugmaschine 10 weist mehrere um den Spindelkopf 19 herum verteilt angeordnete Werkzeugwechsler 31 auf, von denen in Fig. 2 lediglich zwei dargestellt sind. Jeder Werkzeugwechsler 31 umfasst eine Parallelogrammführung 32, an deren unterem Ende jeweils ein Greifer 33 angeordnet ist, der ein Werkzeug 23 trägt, das in einen schematisch dargestellten Werkzeughalter 34 eingespannt ist.

Die Arbeitsspindel weist an ihrem unteren Ende eine Werkzeugaufnahme 35 auf, die als Innenkegel ausgebildet ist und in die die Werkzeughalter 34 mit ihrem geometrisch passenden Hohlkegel 36 eingesetzt werden können. Zu diesem Zweck wird eine bei 37 angedeutete Hülse, die die einzelnen Werkzeugwechsler 31 trägt, in Fig. 2 nach oben gefahren.

Während bei der Werkzeugmaschine aus Fig. 1 die Arbeitsspindel 22 jeweils bis zum Stillstand abgebremst wird, bevor ein Greifer den Werkzeughalter erfassen kann, damit das Spannsystem den Werkzeughalter ausstoßen kann, verbleiben bei der Werkzeugmaschine aus Fig. 2 die Greifer 33 sowohl in der zu der Werkzeugaufnahme 35 beabstandeten Magazinposition als auch in der Arbeitsposition an dem Werkzeughalter 34. Nach dem Einspannen des Hohlkegels 36 in die Werkzeugaufnahme 35 wird die Hülse 37 ein kleines Stück abgesenkt, wodurch der Werkzeughalter 34 aus dem Greifer 33 freikommt und sich frei gegenüber diesem verdrehen kann.

Da bei der Werkzeugmaschine aus Fig. 2 die Greifer 33 permanent an den Werkzeughaltern 34 verbleiben, können die Werkzeughalter 34 bei noch mit Kupplungsdrehzahl drehender Arbeitsspindel 22 eingewechselt und ausgewechselt werden, was einen Zeitvorteil beim Werkzeugwechsel mit sich bringt.

Die beiden insoweit beschriebenen Werkzeugmaschinen sind aus dem Stand der Technik hinreichend bekannt.

Bei beiden Werkzeugmaschinen wird jetzt ein erfindungsgemäß vorgesehenes Spannsystem verwendet, mit dem das erfindungsgemäße Verfahren zum werkzeugwechsel durchgeführt werden kann.

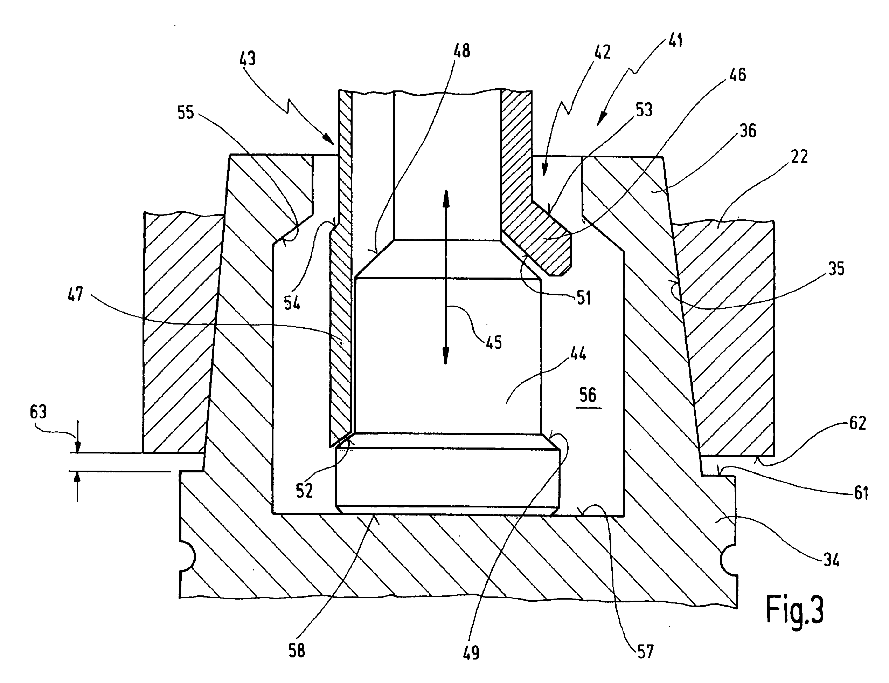

Dies wird jetzt anhand der Figuren 3 bis 6 erläutert, die die Arbeitsspindel 22 im Bereich der Werkzeugaufnahme 35 in schematischer Schnittdarstellung zeigen, wobei jeweils ein Werkzeughalter 34 mit seinem Hohlkegel 36 in die Werkzeugaufnahme 35 bereits eingesetzt ist.

In der Arbeitsspindel 22 ist ein schematisch angedeutetes Spannsystem 41 vorgesehen, das eine an sich bekannte Spannvorrichtung 42 sowie eine Haltevorrichtung 43 umfasst, die erfindungsgemäß vorgesehen ist. Sowohl die Spannvorrichtung 42 als auch die Haltevorrichtung 43 werden durch einen Spanndorn 44 betätigt, der zu diesem Zweck einen axialen Hub ausführen kann, was durch einen Doppelpfeil 45 angedeutet ist.

Die Spannvorrichtung 42 umfasst in an sich bekannter Weise umfänglich um den Spanndorn 44 herum verteilte erste Zangensegmente 46, von denen in den Figuren 3 bis 6 rechts jeweils ein Zangensegment dargestellt ist. In vergleichbarer Weise umfasst die Haltevorrichtung 43 umfänglich um den Spanndorn 44 herum verteilte zweite Zangensegmente 47, von denen in den Figuren 3 bis 6 links vom Spanndorn 44 ein Zangensegment dargestellt ist. Die Zangensegmente 46 und 47 können in Umfangsrichtung abwechselnd angeordnet sein, wobei die Zahl der zweiten Zangensegmente 47 geringer sein kann als die Zahl der ersten Zangensegmente 46.

Sowohl die ersten Zangensegmente 46 als auch die zweiten Zangensegmente 47 wirken mit dem Spanndorn 44 derart zusammen, dass sie durch den axialen Hub 45 von ihrer in Fig. 3 gezeigten radial inneren Stellung, in der sie den Hohlschaft 46 vollständig freigeben, in ihre radial äußere Stellung bewegbar sind,die in den Figuren 4 bis 6 gezeigt sind und noch näher erläutert werden.

Zu diesem Zweck sind an dem Spanndorn 44 eine obere Kegelfläche 48 sowie eine untere Kegelfläche 49 vorgesehen, die als erste bzw. zweite Gegenschräge für erste Gleitschrägen 51 an den ersten Zangensegmenten 46 bzw. zweite Gleitschrägen 52 an den zweiten Zangensegmenten 47 dienen. In axialer Richtung ist der Abstand zwischen den Kegelflächen 48 und 49 kleiner als der Abstand zwischen den Gleitschrägen 51, 52, so dass beim Hochziehen des Spanndorns 44 erst die Zangensegmente 47 und danach die Zangensegmente 46 radial nach außen bewegt werden.

Abgelegen von den ersten bzw. zweiten Gleitschrägen 51, 52 sind an den ersten Zangensegmenten 46 erste Halteschultern 53 und an den zweiten Zangensegmenten 47 zweite Halteschultern 54 vorgesehen, die mit einer nach innen vorspringenden, umfänglich verlaufenden Anlagefläche 55 in dem Hohlschaft 36 zusammenwirken, wenn die Zangensegmente 46 und/oder 47 radial nach außen bewegt werden. Die Halteschultern 53 und 54 liegen axial etwa auf gleicher Höhe.

In dem in Fig. 3 gezeigten Betriebszustand wurde der Hohlschaft 36 so weit in die Werkzeugaufnahme 35 eingeführt, dass der Spanndorn 44 in einen Hohlraum 56 eingreift, der in dem Hohlschaft 36 vorgesehen ist. Der Hohlraum 56 weist einen Hohlraumboden 57 auf, mit dem in Fig. 3 der Spanndorn 44 mit seiner Stirnfläche 58 in Anlage ist.

In der in Fig. 3 gezeigten Betriebsstellung, in der weder die Spannvorrichtung 42 noch die Haltevorrichtung 43 ihren Spannvorgang bzw. Haltevorgang durchgeführt haben, die Zangensegmente 46 und 47 also noch radial innen liegen, weist der Werkzeughalter mit seiner Ringschulter 61 zu einer stirnseitig an der Arbeitsspindel 22 vorgesehenen Gegenfläche 62 einen geringen Abstand auf, der bei 63 angedeutet ist. Dieser Abstand beträgt beispielsweise 0,5 mm.

In der in Fig. 3 gezeigten Betriebsposition kann die Arbeitsspindel 22 stehen oder sich mit geringer Kupplungsdrehzahl drehen. Der Spanndorn 44 führt jetzt in Richtung des Pfeils 45 nach oben einen Haltehub aus, bei dem sich die Stirnfläche 58 des Spanndorns 44 von dem Hohlraumboden 57 um einen bei 64 angedeuteten Abstand abhebt. Durch diesen Haltehub 64 gleitet die zweite Gleitschräge 52 auf der zweiten Kegelfläche 49 nach außen, so dass sich die zweiten Zangensegmente 47 verkippen und mit ihrer zweiten Halteschulter 54 in Anlage mit der Anlagefläche 55 gelangen. Durch den geringen Haltehub 64 ist der Werkzeughalter 34 jetzt sicher in der Arbeitsspindel 22 gehalten, so dass er nicht mehr aus der Werkzeugaufnahme 35 herausfallen kann. Die Ringschulter 61 und die Gegenfläche 62 weisen zueinander jedoch noch den Abstand 63 auf, der in Fig. 3 gezeigt ist. Der Zustand nach dem Haltehub 64 ist in Fig. 4 gezeigt. Bei diesem Zustand kann beispielsweise der Greifer bei der Werkzeugmaschine aus Fig. 1 von dem Werkzeughalter wegfahren, während bei der Werkzeugmaschine aus Fig. 2 der Greifer 33 durch Verfahren der Hülse 37 so weit abgesenkt werden kann, dass der Werkzeughalter 34 nicht mehr von dem Greifer 33 getragen wird, sich gegenüber diesem also frei bewegen kann.

Wenn der Zustand der Fig. 4 erreicht ist, kann folglich die Arbeitsspindel 22 auf ihre Betriebsdrehzahl hochbeschleunigt werden, ohne dass die Gefahr besteht, dass der Werkzeughalter 34 aus der Werkzeugaufnahme 35 wieder herausfällt, denn er wird ja durch die zweiten Zangensegmente sicher gehalten.

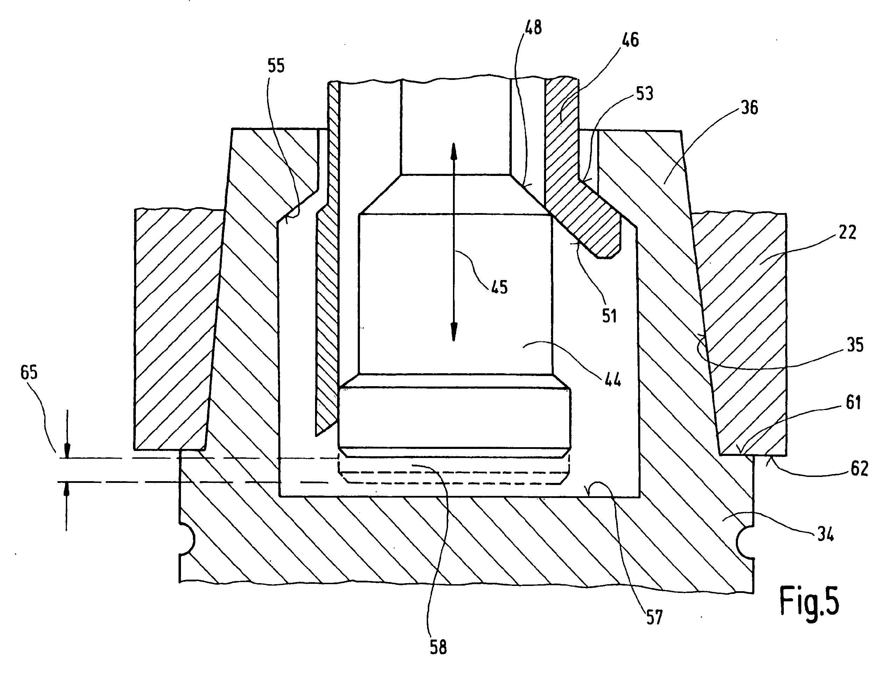

Während des Hochbeschleunigens der Arbeitsspindel 22 führt der Spanndorn 44 in Richtung des Pfeils 45 nach oben einen Spannhub aus, der in Fig. 5 bei 65 gezeigt ist. Im Vergleich mit Fig. 4 ist zu erkennen, dass der Spanndorn 44 in dem Spannhub 65 einen axial größeren Weg zurücklegt als in dem Haltehub 64.

Durch den Spannhub 65 gleiten die ersten Zangensegmente mit ihrer ersten Gleitschräge 51 auf der ersten Kegelfläche 48 nach außen, so dass sie mit ihrer ersten Halteschulter 53 in Anlage mit der Anlagefläche 55 gelangen. Dabei wird der Hohlkegel 36 so weit in die Werkzeugaufnahme 35 hineingezogen, dass die Ringschulter 61 in Anlage mit der Gegenfläche 62 gerät. Der Werkzeughalter 34 ist jetzt sicher in der Werkzeugaufnahme 35 verspannt, wobei durch die Plananlage zwischen Ringschulter 61 und Gegenfläche 62 für eine genaue Positionierung des Werkzeughalters 34 in der Arbeitsspindel 22 gesorgt wird, so dass mit dem von dem Werkzeughalter 34 getragenen Werkzeug hoch präzise Bearbeitungen von Werkstücken durchgeführt werden können.

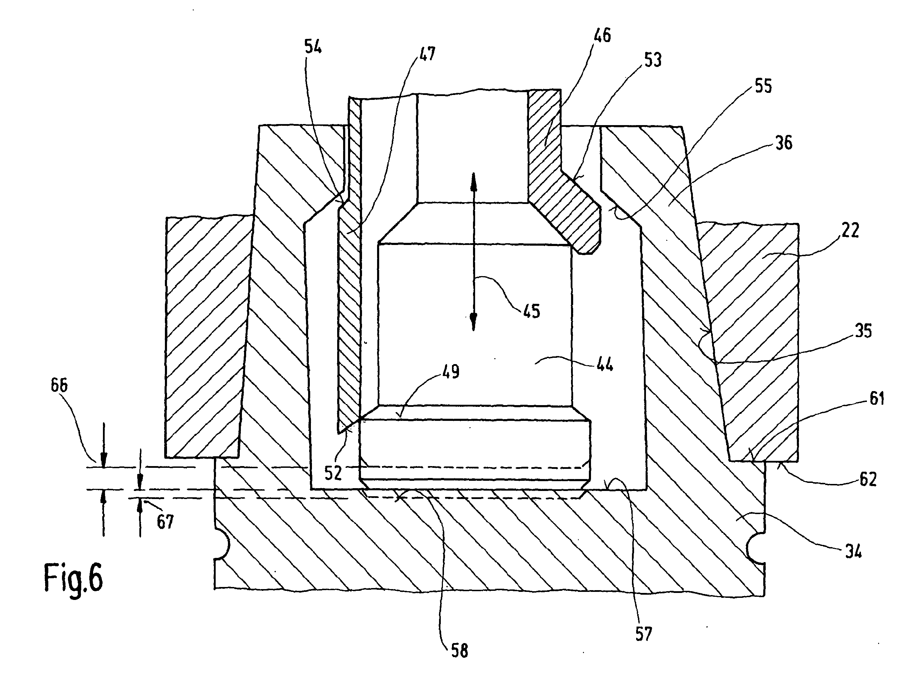

Wenn der Einsatz des eingewechselten Werkzeuges beendet ist, wird die Arbeitsspindel 22 zum Stillstand oder auf Kupplungsdrehzahl heruntergebremst. Sobald das Werkzeug von dem Werkstück freigekommen ist, wird zeitgleich von dem Spanndorn 44 ein Lösehub 66 durchgeführt, der die Wirkung des Spannhubes 65 rückgängig macht. Dieser Zustand ist in Fig. 6 gezeigt. Dadurch, dass der Spanndorn 44 in Richtung des Pfeils 45 in Fig. 6 um den Lösehub 66 nach unten bewegt wurde, sind die ersten Zangensegmente 46 mit ihren ersten Halteschultern 53 von der Anlagefläche 55 freigekommen, während sich die zweiten Zangensegmente 47 mit ihrer zweiten Halteschulter 54 noch unterhalb der Anlagefläche 55 befinden, so dass der Werkzeughalter 34 nicht aus der Werkzeugaufnahme 35 herausfallen kann.

In Fig. 6 ist zu erkennen, dass die Ringschulter 61 noch in Anlage mit der Gegenfläche 62 ist, obwohl der Spanndorn 44 bereits den Lösehub 66 durchgeführt hat und mit seiner Stirnfläche 58 wieder auf dem Hohlraumboden 57 aufliegt. Durch den Spannhub 65 wurde der Hohlschaft 36 nämlich unter solcher Spannung in die Werkzeugaufnahme 35 eingezogen, dass er dort auch dann klemmen bleibt, wenn die ersten Zangensegmente 46 den Hohlkegel 36 wieder freigeben. In der Regel fällt der Werkzeughalter 34 beim Abbremsen der Arbeitsspindel 62 von Betriebsdrehzahl auf Kupplungsdrehzahl oder zum Stillstand auch nicht aus der Werkzeugaufnahme 35 heraus, ganz auszuschließen ist ein derartiges, undefiniertes Herausfallen des Werkzeughalters 34 aus der Werkzeugaufnahme 35 jedoch nicht, weshalb erfindungsgemäß die zweiten Zangensegmente 47 vorgesehen sind. Sollte in Fig. 6 der Werkzeughalter 34 aus der Werkzeugaufnahme 35 herausfallen, so wird er durch die zweiten Halteschultern 54 der zweiten Zangensegmente 47 aufgefangen.

Wenn die Arbeitsspindel 22 auf Kupplungsdrehzahl oder zum Stillstand abgebremst wurde, führt der Spanndorn 44 noch seinen Freigabehub aus, der in Fig. 6 bei 67 angedeutet ist. Der Spanndorn bewegt sich dann in Fig. 6 weiter nach unten, wodurch die zweiten Zangensegmente wieder ihre radial innere Stellung einnehmen, die in Fig. 3 gezeigt ist. Mit seiner Stirnfläche 58 drückt der Spanndorn 44 dabei auf den Hohlraumboden 57 und stößt dadurch den Werkzeughalter 34 in den Greifer aus, der entweder wieder zu dem Werkzeughalter geführt wurde, oder an diesem verblieben ist.

Es ist alternativ auch möglich, die ersten und die zweiten Zangensegmente 46, 47 jeweils an einem gemeinsamen Segment auszubilden, so dass umfänglich verteilt beispielsweise sechs Segmente vorgesehen sind, an denen jeweils sowohl die erste und zweite Gleitschräge 51 und 52 als auch die erste und zweite Halteschulter 53 und 54 ausgebildet sind.

## Patentansprüche

1. Verfahren zum Wechseln von Werkzeugen (23) an einer Werkzeugmaschine (10), die zumindest eine Arbeitsspindel (22) mit einer Werkzeugaufnahme (35) für die Werkzeuge (23) tragende Werkzeughalter (34) sowie einen Werkzeugwechsler (31) mit einem Greifer (33) für die Werkzeughalter (34) umfasst, um die Werkzeughalter (34) zwischen ihrer zu der Werkzeugaufnahme (35) beabstandeten Magazinposition und ihrer Arbeitsposition in der Werkzeugaufnahme (35) zu überführen, wobei in der Arbeitsspindel (22) ein Spannsystem (41) angeordnet ist, das einen in die Werkzeugaufnahme (35) eingesetzten Werkzeughalter (34) durch einen Spannvorgang (65) verspannt und durch einen Lösevorgang (66) freigibt, bei dem
a) ein in seiner Magazinposition befindlicher Werkzeughalter (34) durch Verfahren des Greifers (33) in die Werkzeugaufnahme (35) eingesetzt wird,
b) das Spannsystem (41) den Werkzeughalter (34) an seinem in die Werkzeugaufnahme (35) eingesetzten oberen Ende (36) ergreift und durch den Spannvorgang (65) in der Werkzeugaufnahme (35) verspannt, wobei der Werkzeughalter (34) von dem Greifer (33) freigegeben und die Arbeitsspindel (22) auf ihre Betriebsdrehzahl hochgefahren wird, und
c) zum Auswechseln des Werkzeuges (23) die Arbeitsspindel (22) abgebremst wird, das Spannsystem (41) den Lösevorgang (66) durchführt, und der Werkzeughalter (34) in den Greifer (33) ausgestoßen wird, der den Werkzeughalter (34) dann in seine Magazinposition überführt,
**dadurch gekennzeichnet, dass** das Spannsystem (41) einen dem Spannvorgang (65) zeitlich vorausgehenden Haltevorgang (64) durchführt, um den in die Werkzeugaufnahme (35) eingesetzten Werkzeughalter (34) zu erfassen, bevor das Spannsystem (41) den Werkzeughalter (34) verspannt, und/oder einen dem Lösevorgang (66) zeitlich nachfolgenden Freigabevorgang (67) durchführt, um den Werkzeughalter (34) nach dem Lösen des Spannsystems (41) noch in der Werkzeugaufnahme (35) zu halten, bis er ausgestoßen wird, und dass das Spannsystem (41) einen Spanndorn (44) umfasst, der beim Einwechseln eines Werkzeughalters (34) einen den Haltevorgang auslösenden Haltehub (64) und daran anschließend einen den Spannvorgang auslösenden Spannhub (65) durchführt, und der beim Auswechseln eines Werkzeughalters (34) einen den Lösevorgang auslösenden Lösehub (66) und daran anschließend einen den Freigabevorgang auslösenden Freigabehub (67) durchführt.

2. Verfahren nach Anspruch 1, **dadurch gekennzeichnet, dass** der Greifer (33) an dem Werkzeughalter (34) verbleibt, wenn dieser in die Werkzeugaufnahme (35) eingespannt ist.

3. Verfahren nach Anspruch 1, **dadurch gekennzeichnet, dass** der Greifer von dem Werkzeughalter weggefahren wird, sobald der Haltevorgang (64) durchgeführt wurde.

4. Verfahren nach einem der Ansprüche 1 bis 3, **dadurch gekennzeichnet, dass** der Werkzeughalter bei stehender Arbeitsspindel (22) ausgewechselt wird.

5. Verfahren nach einem der Ansprüche 1 bis 3, **dadurch gekennzeichnet, dass** der Werkzeughalter (34) bei mit Kupplungsdrehzahl rotierender Arbeitsspindel (22) ausgewechselt wird.

6. Verfahren nach einem der Ansprüche 1 bis 5, **dadurch gekennzeichnet, dass** der Lösevorgang (66) und/oder der Spannvorgang (65) bei rotierender Arbeitsspindel (22) durchgeführt werden.

7. Verfahren nach Anspruch 6, **dadurch gekennzeichnet, dass** der Lösevorgang (66) bei höherer Drehzahl der Arbeitsspindel (22) als der Freigabevorgang (67) und/oder der Spannvorgang (65) bei höherer Drehzahl der Arbeitsspindel (22) als der Haltevorgang (64) durchgeführt wird.

8. Verfahren nach einem der Ansprüche 1 bis 7, **dadurch gekennzeichnet, dass** der Spanndorn (44) nach oder bei dem Freigabehub (67) den Werkzeughalter (34) aus der Werkzeugaufnahme (35) ausstößt.

9. Verfahren nach einem der Ansprüche 1 bis 8, **dadurch gekennzeichnet, dass** der Spanndorn (44) bei dem Lösehub (66) einen axial längeren Weg als bei dem Freigabehub (67) und/oder bei dem Spannhub (65) einen axial längeren Weg als bei dem Haltehub (64) zurücklegt.

10. Werkzeugmaschine, die zumindest eine Arbeitsspindel (22) mit einer Werkzeugaufnahme (35) für Werkzeuge (23) tragende Werkzeughalter (34) sowie einen Werkzeugwechsler (31) mit einem Greifer (33) für die Werkzeughalter (34) umfasst, um die Werkzeughalter (34) zwischen ihrer zu der Werkzeugaufnahme (35) beabstandeten Magazinposition und ihrer Arbeitsposition in der Werkzeugaufnahme (35) zu überführen, wobei in der Arbeitsspindel (22) ein Spannsystem (41) mit einer Spannvorrichtung (42) vorgesehen ist, durch die ein in die Werkzeugaufnahme (35) eingesetzter Werkzeughalter verspannt wird, wobei das Spannsystem (41) zusätzlich eine Haltevorrichtung (43) zum Erfassen eines in der Werkzeugaufnahme (35) befindlichen Werkzeughalters (34) umfasst, **dadurch gekennzeichnet, dass** das Spannsystem (41) einen Spanndorn (44) umfasst, der mit seinem axialen Hub (45) sowohl die Spannvorrichtung (42) als auch die Haltevorrichtung (43) betätigt.

11. Werkzeugmaschine nach Anspruch 10, **dadurch gekennzeichnet, dass** die Spannvorrichtung (42) erste Zangensegmente (46) umfasst, die zwischen einer radial äußeren Stellung, in der sie in einen Hohlschaft (36) des Werkzeughalters (34) eingreifen und diesen verspannen, und einer radial inneren Stellung bewegbar sind, in der sie den Hohlschaft (36) freigeben.

12. Werkzeugmaschine nach Anspruch 10 oder 11, **dadurch gekennzeichnet, dass** die Haltevorrichtung (43) zweite Zangensegmente (47) umfasst, die zwischen einer radial äußeren Stellung, in der sie in einen Hohlschaft (36) des Werkzeughalters (34) eingreifen und diesen drehfest in der Werkzeugaufnahme (35) halten, und einer radial inneren Stellung bewegbar sind, in der sie den Hohlschaft (36) freigeben.

13. Werkzeugmaschine nach Anspruch 11 und 12, **dadurch gekennzeichnet, dass** die ersten und zweiten Zangensegmente (46, 47) erste bzw. zweite Gleitschrägen (51, 52) aufweisen, die mit ersten bzw. zweiten Gegenschrägen (48, 49) auf dem Spanndorn (44) zusammenwirken, wobei die ersten und zweiten Gleitschrägen (51, 52) in axialer Richtung (45) einen größeren Abstand zueinander aufweisen als die ersten und zweiten Gegenschrägen (48, 49).

14. Werkzeugmaschine nach einem der Ansprüche 11 bis 13, **dadurch gekennzeichnet, dass** die ersten und die zweiten Zangesegmente (46, 47) erste bzw. zweite Halteschultern (53, 54) aufweisen, die axial etwa auf gleicher Höhe liegen und einer nach innen vorspringenden Anlagefläche (55) in dem Hohlschaft (36) zugeordnet sind.

15. Werkzeugmaschine nach einem der Ansprüche 11 bis 14, **dadurch gekennzeichnet, dass** die ersten und zweiten Zangensegmente (46, 47) jeweils an einem gemeinsamen Segment ausgebildet sind.

## Claims

1. Method for changing tools (23) on a machine tool (10) which comprises at least one working spindle (22) with a tool-holding fixture (35) for tool holders (34) carrying the tools (23) and a tool changer (31) with a gripper (33) for the tool holders (34) in order to transfer the tool holders (34) between their magazine position, which is spaced apart from the tool-holding fixture (35), and their operating position in the tool-holding fixture (35), a clamping system (41) being arranged in the working spindle (22), which clamping system fixes a tool holder (34), which is inserted into the tool-holding fixture (35), by means of a clamping operation (65) and releases it by means of a release operation (66), in which
a) a tool holder (34) which is in its magazine position is inserted into the tool-holding fixture (35) by movement of the gripper (33),
b) the clamping system (41) grasps the tool holder (34) at its upper end (36) inserted into the tool-holding fixture (35) and fixes it in the tool-holding fixture (35) by means of the clamping operation (65), whereby the tool holder (34) is released from the gripper (33) and the working spindle (22) is brought up to its operating speed, and
c) in order to replace the tool (23) the working spindle (22) is braked, the clamping system (41) carries out the release operation (66), and the tool holder (34) is ejected into the gripper (33) which then transfers the tool holder (34) into its magazine position,
**characterized in that** the clamping system (41) carries out a retaining operation (64) which temporally precedes the clamping operation (65) in order to grasp the tool holder (34) inserted into the tool-holding fixture (35) before the clamping system (41) fixes the tool holder (34), and/or carries out an unblocking operation (67) which temporally follows the release operation (66) in order, after the release of the clamping system (41), to still retain the tool holder (34) in the tool-holding fixture (35) until it is ejected, and that the clamping system (41) comprises a mandrel (44) which, when a tool holder (34) is being exchanged, carries out a retaining stroke (64) triggering the retaining operation and subsequently carries out a clamping stroke (65) triggering the clamping operation and which, when a tool holder (34) is being replaced, carries out a release stroke (66) triggering the release operation and subsequently carries out an unblocking stroke (67) triggering the unblocking operation.

2. Method according to claim 1, **characterized in that** the gripper (33) remains on the tool holder (34) when the latter is clamped into the tool-holding fixture (35).

3. Method according to claim 1, **characterized in that** the gripper is moved away from the tool holder as soon as the retaining operation (64) has been carried out.

4. Method according to anyone of claims 1 to 3, **characterized in that** the tool holder is replaced with the working spindle (22) stationary.

5. Method according to anyone of claims 1 to 3, **characterized in that** the tool holder (34) is replaced with the working spindle (22) rotating at coupling speed.

6. Method according to anyone of claims 1 to 5, **characterized in that** the release operation (66) and/or the clamping operation (65) is carried out with the working spindle (22) rotating.

7. Method according to claim 6, **characterized in that** the release operation (66) is carried out at a higher rotational speed of the working spindle (22) than the unblocking operation (67), and/or the clamping operation (65) is carried out at a higher rotational speed of the working spindle (22) than the retaining operation (64).

8. Method according to anyone of claims 1 to 7, **characterized in that** the mandrel (44) ejects the tool holder (34) from the tool-holding fixture (35) after or during the unblocking stroke (67).

9. Method according to anyone of claims 1 to 8, **characterized in that** the mandrel (44) covers an axially longer distance during the release stroke (66) than during the unblocking stroke (67) and/or covers an axially longer distance during the clamping stroke (65) than during the retaining stroke (64).

10. Machine tool which comprises at least one working spindle (22) with a tool-holding fixture (35) for tool holders (34) carrying tools (23) and a tool changer (31) with a gripper (33) for the tool holders (34) in order to transfer the tool holders (34) between their magazine position, which is spaced apart from the tool-holding fixture (35), and their operating position in the tool-holding fixture (35), there being provided in the working spindle (22) a clamping system (41) with a clamping apparatus (42), by means of which a tool holder inserted into the tool-holding fixture (35) is fixed, whereby the clamping system (41) additionally comprises a retaining apparatus (43) for holding a tool holder (34) situated in the tool-holding fixture (35), **characterized in that** the clamping system (41) comprises a mandrel (44) which, by means of its axial stroke (45), actuates both the clamping apparatus (42) and the retaining apparatus (43).

11. Machine tool according to claim 10, **characterized in that** the clamping apparatus (42) comprises first nipper segments (46) which can be moved between a radially outer position, in which they engage in a hollow shank (36) of the tool holder (34) and fix the latter, and a radially inner position, in which they release the hollow shank (36).

12. Machine tool according to claim 10 or 11, **characterized in that** the retaining apparatus (43) comprises second nipper segments (47) which can be moved between a radially outer position, in which they engage in a hollow shank (36) of the tool holder (34) and retain the latter in a rotationally fixed manner in the tool-holding fixture (35), and a radially inner position, in which they release the hollow shank (36).

13. Machine tool according to claim 11 and 12, **characterized in that** the first and second nipper segments (46, 47) have first and second sliding slopes (51, 52) which interact with first and second mating slopes (48, 49) on the mandrel (44), whereby the first and second sliding slopes (51, 52) are at a greater distance from each other in the axial direction (45) than the first and second mating slopes (48, 49).

14. Machine tool according to anyone of claims 11 to 13, **characterized in that** the first and the second nipper segments (46, 47) have first and second retaining shoulders (53, 54) which lie axially approximately at the same height and are assigned to an inwardly projecting bearing surface (55) in the hollow shank (36).

15. Machine tool according to anyone of claims 11 to 14, **characterized in that** the first and second nipper segments (46, 47) are formed in each case on a common segment.

## Revendications

1. Procédé de changement d'outils (23) sur une machine-outil (10) qui comprend au moins une broche de travail (22) avec un logement d'outil (35) pour les porte-outils (34) portant des outils (23) ainsi qu'un changeur d'outil (31) avec une pince (33) pour les porte-outils (34) afin de transférer les porte-outils (34) entre leur position de magasin espacée du logement d'outil (35) et leur position de travail dans le logement d'outil (35), un système de serrage (41) étant disposé dans la broche de travail (22), lequel serre un porte-outil (34) inséré dans le logement d'outil (35) par un processus de serrage (65) et le libère par un processus de desserrage (66), pour lequel
a) un porte-outil (34) se trouvant dans sa position de magasin est inséré par déplacement de la pince (33) dans le logement d'outil (35),
b) le système de serrage (41) saisit le porte-outil (34) sur son extrémité supérieure (36) insérée dans le logement d'outil (35) et le serre par le processus de serrage (65) dans le logement d'outil (35), le porte-outil (34) étant libéré de la pince (33) et la broche de travail (22) montant en puissance jusqu'à sa vitesse de régime, et
c) pour remplacer l'outil (23), la broche de travail (22) est freinée, le système de serrage (41) réalise le processus de desserrage (66), et le porte-outil (34) est éjecté dans la pince (33) qui transfert ensuite le porte-outil (34) dans sa position de magasin,
**caractérisé en ce que** le système de serrage (41) réalise un processus de retenue (64) précédant le processus de serrage (65) afin de saisir le porte-outil (34) inséré dans le logement d'outil (35), avant que le système de serrage (41) ne serre le porte-outil (34) et/ou réalise un processus de libération (67) suivant le processus de desserrage (66) afin de retenir le porte-outil (34) après le desserrage du système de serrage (41) encore dans le logement d'outil (35) jusqu'à ce qu'il soit éjecté, et **en ce que** le système de serrage (41) comprend un mandrin de serrage (44) qui réalise lors du changement d'un porte-outil (34) une course de retenue (64) déclenchant le processus de retenue et réalise ensuite une course de serrage (65) déclenchant le processus de serrage, et qui réalise lors du remplacement d'un porte-outil (34) une course de desserrage (66) déclenchant le processus de desserrage et réalise ensuite une course de libération (67) déclenchant le processus de libération.

2. Procédé selon la revendication 1, **caractérisé en ce que** la pince (33) reste sur le porte-outil (34) lorsque celui-ci est serré dans le logement d'outil (35).

3. Procédé selon la revendication 1, **caractérisé en ce que** la pince est déplacée du porte-outil dès que le processus de retenue (64) a été réalisé.

4. Procédé selon l'une quelconque des revendications 1 à 3, **caractérisé en ce que** le porte-outil est remplacé, lorsque la broche de travail (22) est verticale.

5. Procédé selon l'une quelconque des revendications 1 à 3, **caractérisé en ce que** le porte-outil (34) est remplacé lorsque la broche de travail (22) tourne à une vitesse de rotation d'accouplement.

6. Procédé selon l'une quelconque des revendications 1 à 5, **caractérisé en ce que** le processus de desserrage (66) et/ou le processus de serrage (65) sont réalisés lorsque la broche de travail (22) tourne.

7. Procédé selon la revendication 6, **caractérisé en ce que** le processus de desserrage (66) est réalisé lorsque la vitesse de rotation de la broche de travail (22) est supérieure à celle du processus de libération (67) et/ou le processus de serrage (65) est réalisé lorsque la vitesse de rotation de la broche de travail (22) est supérieure à celle du processus de retenue (64).

8. Procédé selon l'une quelconque des revendications 1 à 7, **caractérisé en ce que** le mandrin de serrage (44) éjecte le porte-outil (34) du logement d'outil (35) après ou lors de la course de libération (67).

9. Procédé selon l'une quelconque des revendications 1 à 8, **caractérisé en ce que** le mandrin de serrage (44) parcourt lors de la course de desserrage (66) un chemin axialement plus long que lors de la course de libération (67) et/ou un chemin axialement plus long lors de la course de serrage (65) que lors de la course de retenue (64).

10. Machine-outil qui comprend au moins une broche de travail (22) avec un logement d'outil (35) pour les porte-outils (34) portant des outils (23) ainsi qu'un changeur d'outil (31) avec une pince (33) pour les porte-outils (34) afin de transférer les porte-outils (34) entre leur position de magasin espacée du logement d'outil (35) et leur position de travail dans le logement d'outil (35), un système de serrage (41) doté d'un dispositif de serrage (42) étant prévu dans la broche de travail (22), grâce auquel un porte-outil inséré dans le logement d'outil est serré, le système de serrage (41) comprenant en outre un dispositif de retenue (43) pour saisir un porte-outil (34) se trouvant dans le logement d'outil (35), **caractérisée en ce que** le système de serrage (41) comprend un mandrin de serrage (44) qui actionne avec sa course (45) axiale le dispositif de serrage (42) ainsi que le dispositif de retenue (43).

11. Machine-outil selon la revendication 10, **caractérisée en ce que** le dispositif de serrage (42) comprend des premiers segments de pince (46) qui peuvent être déplacés entre une position radialement extérieure, dans laquelle ils s'engagent dans une tige creuse (36) du porte-outil (34) et la serre, et une position radialement intérieure, dans laquelle ils libèrent la tige creuse (36).

12. Machine-outil selon la revendication 10 ou 11, **caractérisée en ce que** le dispositif de retenue (43) comprend des seconds segments de pince (47) qui peuvent être déplacés entre une position radialement extérieure, dans laquelle ils s'engagent dans une tige creuse (36) du porte-outil (34) et la maintiennent de manière solidaire en rotation dans le logement d'outil (35), et une position radialement intérieure, dans laquelle ils libèrent la tige creuse (36).

13. Machine-outil selon la revendication 11 ou 12, **caractérisée en ce que** les premiers et les seconds segments de pince (46, 47) présentent des premiers ou des seconds chanfreins de glissement (51, 52) qui coopèrent avec des premiers ou des seconds chanfreins antagonistes (48, 49) sur le mandrin de serrage (44), les premiers et les seconds chanfreins de glissement (51, 52) présentant dans le sens axial (45) une distance plus grande les uns par rapport aux autres que les premiers et seconds chanfreins antagonistes (48, 49).

14. Machine-outil selon l'une quelconque des revendications 11 à 13, **caractérisée en ce que** les premiers et les seconds segments de pince (46, 47) présentent des premiers ou des seconds épaulements de retenue (53, 53) qui se trouvent axialement à peu près à la même hauteur et sont associés à une surface d'appui (55) dépassant vers eux dans la tige creuse (36).

15. Machine-outil selon l'une quelconque des revendications 11 à 14, **caractérisée en ce que** les premiers et les seconds segments de pince (46, 47) sont réalisés respectivement sur un segment commun.
